# EUROPEAN PATENT APPLICATION

(11) **EP 2 725 224 A1**
(43) Date of publication of application: **30.04.2014**
(21) Application number: 12190145.8
(22) Date of filing: 26.10.2012
(51) Int. Cl.: F03D 11/00

(54) **A system and method for de-icing a wind turbine blade**

(71) Applicant: LM WP Patent Holding A/S, 6000 Kolding (DK)
(72) Inventor: Fuglsang, Lars, 5260 Odense S (DK); Brylle, Jens, 6000 Kolding (DK)
(74) Representative: Hussey, Paul Anthony

(57) **Abstract**

A system and method for the de-icing of wind turbine blades is described, which provides for more efficient and effective de-icing compared to the prior art. The wind turbine comprises an array of de-icing devices arranged to disperse a de-icing medium. The pitch of the wind turbine blades may be adjusted relative to the de-icing array, and/or the direction of the de-icing devices of the array may be arranged so as to provide a targeted de-icing of areas of the wind turbine blades, preferably along the leading edges of the blades.

## Description

### Field of the Invention

The present invention relates to a system and associated method for de-icing a wind turbine blade.

### Background of the Invention

Icing of wind turbine blades is a serious concern for modem wind turbine operation, as continued ice build-up on blades can lead to negative impact on blade aerodynamics and/or additional stress and loading to wind turbine blade structures. It is known to provide de-icing systems on wind turbine structures and in wind turbine blades, to remove and/or prevent ice build-up on the surface of wind turbine blades.

An example of a known de-icing system is shown in US 7,802,961, wherein sea water may be pumped into an offshore wind turbine, for dispersal via the wind turbine hub into the area upwind of the turbine blades, and for dispersal from nozzles provided on the surface of the wind turbine tower for dispersal into the area downwind of the turbine blades.

However, such a system provides for an inefficient de-icing of the wind turbine blades, as a relatively large dispersal pattern must be used to ensure that all surfaces of the wind turbine blades are cleared of ice. This requires a relatively extensive and complicated dispersal system, as well as a relatively large volume of sea water. Alternative de-icing systems, involving the use of convective heating elements and/or antifreeze agents, present similar problems of inefficiency.

Accordingly, it is an object of the invention to provide a system and associated method for the de-icing of wind turbine blades with reduced complexity relative to the prior art, and having reduced energy and/or de-icing medium requirements.

### Summary of the Invention

Accordingly, there is provided a method of de-icing a wind turbine blade provided on a wind turbine, the blade pitchable relative to said wind turbine, the method comprising the steps of:
providing a de-icing array comprising at least one de-icing device; and
pitching said wind turbine blade relative to said de-icing array to provide a targeted de-icing of a portion of the surface of the wind turbine blade.

By coordinating the blade pitching with the de-icing array, a more accurate and efficient de-icing of the blade surface can be performed, as the portions of the blade to be de-iced may be pitched closer to the de-icing array. Additionally or alternatively, where the de-icing devices have a relatively small area of effective operation, the controlled pitching of the blade can ensure that those portions of the blade it is desired to de-ice may be positioned within the area of effective operation of the de-icing devices.

The method may further include the step of performing a de-icing operation of a portion of the surface of the wind turbine blade using said at least one de-icing device.

It will be understood that said step of performing a de-icing operation may comprise directing a de-icing medium from said at least one de-icing device to said portion of the surface of the wind turbine blade, e.g. an anti-freeze fluid, such as glycol or heated water applied from a spray nozzle, heated air from a convective heater element or a heat exchanger circuit, etc. It will also be understood that the step of performing a de-icing operation may comprise the application of any other suitable technique for the removal of ice from the surface of a wind turbine blade, e.g. a radiative heat transfer, mechanical abrasion e.g. using ablative slurry, acoustic or ultrasonic vibration, etc.

In a preferred aspect of the invention, the method comprises the steps of:
pitching said wind turbine blade such that a portion of said blade it is desired to de-ice faces said de-icing array.

In order to provide optimum utilization of the de-icing system resources, the blade may be pitched such that de-icing is only performed on a targeted area of interest of the blade surface.

Preferably, the method comprises the step of pitching said wind turbine blade such that the leading edge of the wind turbine blade faces the de-icing array.

As the blade leading edge is the portion of the blade which is most likely to experience ice formation during operation, by pitching the blade leading edge to face a de-icing array provides for effective operation of the de-icing method.

In one aspect, the wind turbine blade is arranged to rotate along a blade rotational path, wherein said step of pitching is performed for a portion of the rotational path of said wind turbine blade.

The pitching of the blade to face the de-icing array can be controlled to only occur for a portion of the rotational cycle of the blade, thereby not significantly affecting blade operation.

Preferably, the method comprises the steps of:
providing a de-icing array adjacent a tower of a wind turbine, and
pitching said wind turbine blade such that a portion of said blade it is desired to de-ice faces said de-icing array as said blade passes the wind turbine tower.

In a preferred aspect of the invention, the method comprises the step of:
parking a wind turbine blade rotor such that a wind turbine blade is located adjacent said de-icing array.

It will be understood that the method may additionally or alternatively be performed during rotation of a wind turbine blade rotor comprising a wind turbine blade.

In an additional or alternative aspect of the invention, there is provided a method of de-icing a wind turbine blade provided on a wind turbine, the blade pitchable relative to said wind turbine, the method comprising the steps of:
providing at least one directional de-icing device;
receiving blade pitch characteristics indicative of the blade pitching; and
adjusting the direction of said at least one de-icing device based on said received blade pitch characteristics.

Once the de-icing devices are appropriately directed, a de-icing operation may be performed using the devices. As the de-icing devices may be adjustable in direction, knowledge of the blade pitch orientation can be used to direct the de-icing devices to provide efficient and effective de-icing for the current blade orientation.

Preferably, the method comprises the step of adjusting the direction of said at least one de-icing device such that said at least one de-icing device faces the leading edge of said wind turbine blade.

By controlling the direction of the de-icing devices to face the blade leading edge, based on the blade pitch information, an efficient, targeted de-icing of the blade leading edge can be carried out.

In an additional or alternative aspect of the invention, there is provided a method of arranging at least one de-icing device for the de-icing of a wind turbine blade provided on a wind turbine, the method comprising the steps of:
receiving blade shape information indicative of the shape of a wind turbine blade; and
positioning said at least one de-icing device based on said received blade shape information.

As the effectiveness of the de-icing devices may depend on the distance of the devices from the surface of the wind turbine blade, the shape of the blade itself can be used to determine the most effective arrangement of de-icing devices for the de-icing of the wind turbine blade. This adjustment can be performed to ensure that the de-icing devices are within an effective range of the surface of the wind turbine blade.

Preferably, the method comprises the step of positioning said at least one de-icing device a pre-defined distance from the surface of the wind turbine blade, based on said received blade shape information.

In one aspect, the method comprises the step of receiving blade shape information in the form of characteristic information regarding the designed geometrical profile of the blade.

In one aspect, said step of positioning comprises providing a de-icing array comprising a static arrangement of a plurality of de-icing devices, said de-icing devices positioned based on the pre-defined shape of the wind turbine blade such that the plurality of de-icing devices are located a pre-defined distance from a surface of the wind turbine blade when said wind turbine blade is adjacent said de-icing array.

When wind turbine blades comprise a pre-bend, or other characteristic geometrical profiles, such pre-defined information can be used as an input to a system determining the best arrangement of de-icing devices in a de-icing array, such that the surface of the blade is within the effective range of the de-icing devices when adjacent to the de-icing array.

Additionally or alternatively, the method comprises the step of receiving blade shape information in the form of blade deflection information indicative of the deflection of a wind turbine blade during wind turbine operation.

In an alternative aspect, said step of positioning comprises providing a de-icing array comprising a dynamically-adjustable arrangement of a plurality of de-icing devices, wherein said plurality of de-icing devices may be positioned based on the dynamically-changing blade shape.

As wind turbine blades may bend or deflect during turbine operation, based on blade loads, wind velocity, etc., the blade may comprise a blade deflection monitoring system operable to detect such deflection and determine the dynamic blade shape. This information can be used as an input to a dynamically-adjustable array of de-icing devices, such that the location of the individual devices in the array can be adjusted to ensure that the blade surface is within the effective range of the devices, and/or that the de-icing array is not in danger of being struck by the deflected blade. Accordingly, such information can be used to determine the best arrangement of de-icing device for efficient de-icing of the blade.

In one aspect, the method comprises the steps of:
providing said at least one de-icing device on an array base member; and
adjusting a linear displacement of said at least one de-icing device from said array base member based on said received blade shape information.

Preferably, said at least one de-icing device is provided adjacent a wind turbine tower, and wherein the linear displacement of said at least one de-icing device from said wind turbine tower is adjusted.

Additionally or alternatively, the invention may comprise the steps of:
detecting a build-up of ice on a portion of a wind turbine blade; and
adjusting said at least one de-icing device to face said portion of a wind turbine blade having said detected ice build-up.

Through the use of sensors operable to detect ice build-up on a blade, e.g. optical sensors such as cameras; load sensors arranged to detect the additional weight of an ice build-up; temperature sensors, etc., the de-icing devices may be directed to focus their de-icing effect on the affected portion of the blade, thereby providing efficient targeted operation of the de-icing system.

In one aspect of the invention, there is provided a method of de-icing at least a portion of a surface of a wind turbine blade of a wind turbine, the method comprising the steps of:
providing a de-icing array moveably mounted to a wind turbine tower of a wind turbine;
parking a wind turbine blade to be de-iced substantially adjacent said wind turbine tower;
moving said de-icing array to a position substantially adjacent said parked wind turbine blade;
pitching said wind turbine blade to be de-iced relative to said de-icing array, such that a surface of said wind turbine blade to be de-iced faces said de-icing array; and
de-icing said surface of said wind turbine blade using said de-icing array.

By the step of parking it will be understood that the wind turbine blade is rotated such that the blade is maintained in a fixed or locked position, wherein the blade is aligned with, or extends in a direction substantially parallel to, the wind turbine tower.

Preferably, said step of providing a de-icing array comprises mounting a de-icing array on the wind turbine tower, the de-icing array rotatable about said tower.

Preferably, said step of pitching is performed such that a leading edge of said wind turbine blade faces said de-icing array.

There is also provided a wind turbine comprising at least one wind turbine blade, a de-icing array comprising at least one de-icing device, and a controller coupled to said de-icing array, wherein said controller is operable to implement any of the above de-icing methods.

In one aspect, the wind turbine comprises a nacelle provided on a tower, the at least one wind turbine blade rotatably mounted to said nacelle, said de-icing array comprising a plurality of de-icing devices provided on a base, wherein said base is mounted on said nacelle.

By providing the de-icing array on a base mounted to the nacelle, then the yaw motion of the nacelle will ensure that the de-icing array is maintained in close relationship with the wind turbine blades, regardless of wind turbine orientation.

Preferably, said base extends from said nacelle adjacent to said tower, wherein rotation of said nacelle relative to said tower causes said de-icing array to be rotated about said tower.

Alternatively, the wind turbine comprises a nacelle provided on a tower, said de-icing array comprising a plurality of de-icing devices provided on a base, wherein said base is rotatably mounted on said tower.

In this case, the de-icing array may be provided de-coupled from the wind turbine nacelle, such that the de-icing array may be independently rotatable about the wind turbine tower, to position the de-icing array in the most effective location for a de-icing operation.

Additionally or alternatively, there is provided a wind turbine comprising:
at least one wind turbine blade arranged to rotate along a blade rotational path;
a de-icing array comprising at least one directional de-icing device,
wherein said de-icing array is arranged such that said at least one directional de-icing device substantially faces against the direction of the blade rotational path.

By directing de-icing devices against the direction of rotation of the wind turbine blades, the de-icing devices will act to de-ice that portion of the wind turbine blades facing in the direction of rotation. This will generally mean that the leading edge of the blades will be kept clear of ice, but it will be understood that other portions of the surface of the wind turbine blades may be de-iced through appropriate pitching of the wind turbine blade relative to the de-icing array.

It will be understood that the de-icing devices may comprise any suitable de-icing apparatus, e.g.
- spray nozzles adapted to disperse a de-icing fluid, which may include heated water, salt water, antifreeze including glycol, etc.;
- a warm air blower;
- an electric heating device, e.g. a convective air heater;
- a waste heat device, operable to disperse a liquid or gas heated by wind turbine components;
- a microwave heating device; and/or
- an acoustic device operable to dislodge ice using acoustic vibration.

In the present application, where reference is made to the dispersal of a de-icing medium, this will be understood to not limiting, and can also refer to the use of de-icing devices not employing an actual medium to remove ice from the surface of a blade, e.g. devices employing radiative heat transfer and/or acoustical vibrations.

It will be understood that any of the above features may be combined and implemented in a single embodiment without departing from the scope of the invention.

### Description of the Invention

Embodiments of the invention will now be described, by way of example only, with reference to the accompanying drawings, in which:
Fig. 1 shows a side plan view of a wind turbine according to an embodiment of the invention comprising a de-icing array;
Fig. 2 shows the wind turbine of Fig. 1 when a wind turbine blade is pitched relative to the de-icing array;
Fig. 3 shows a front plan view of the wind turbine of Fig. 1;
Fig. 4 shows a side plan view of an embodiment of the invention, comprising a de-icing array having linearly displaced de-icing devices; and
Fig. 5 shows a front plan view of an embodiment of the invention, having an array of de-icing devices arranged to face against the direction of blade rotation.

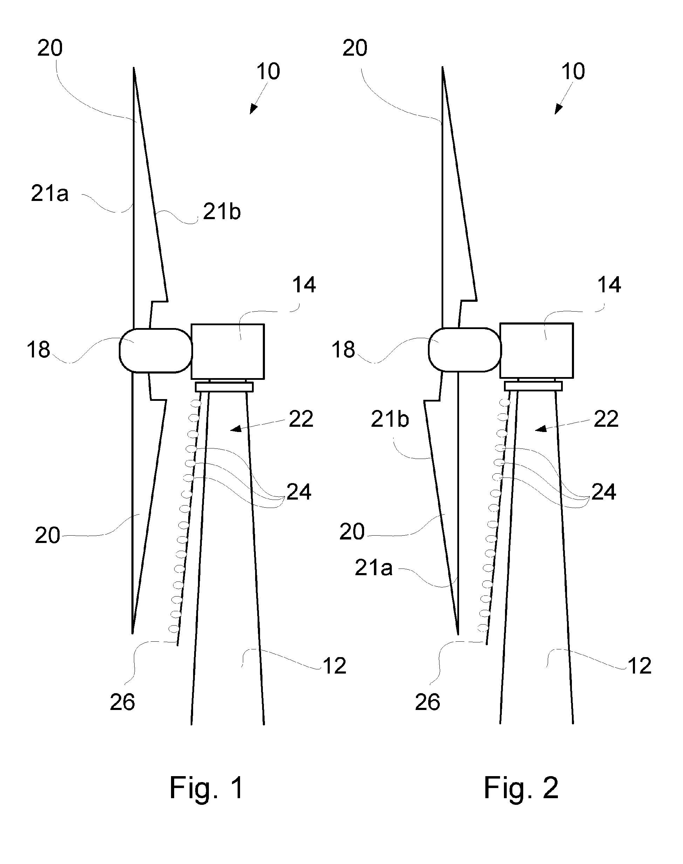

With reference to Fig. 1, an upwind horizontal axis wind turbine 10 is illustrated according to the so-called "Danish concept". The wind turbine 10 comprises a wind turbine tower 12, a nacelle 14 provided at the top of said tower 12, and a wind turbine rotor 16 rotatably provided on said nacelle 14. The rotor 16 comprises a rotor hub 18 and a plurality of wind turbine blades 20 extending radially from said rotor hub 18. The wind turbine blades 20 are pitchably mounted to the rotor hub 18, such that the blades 20 may be pitched relative to the rotor hub 18, to optimise turbine operation based on operating conditions. The nacelle 14 is rotatably mounted on said tower 12, such that by a yawing action of the nacelle 14 the wind turbine rotor 16 may face the oncoming wind at the turbine 10.

The wind turbine blades 20 comprise an airfoil profile, having a leading edge 21a and a trailing edge 21b. The wind turbine blades 20 follow a generally circular rotational path around the rotor hub 18.

Wind turbine blades are generally formed from fibre-reinforced plastics material, i.e. glass fibres and/or carbon fibres which are arranged in a mould and cured with a resin to form a solid structure. Modem wind turbine blades can often be in excess of 30-40 metres in length, having blade root diameters of several metres.

The wind turbine 10 further comprises a de-icing array 22, wherein a plurality of de-icing devices 24 are provided on a base member 26. In the embodiment shown, the de-icing array 22 extends parallel to and adjacent the wind turbine tower 12, the array of de-icing devices 24 located between the wind turbine tower 12 and the rotational path of the wind turbine blades 20.

It will be understood that the de-icing devices 24 of the array 22 may comprise any device suitable for the dispersal of a de-icing medium, e.g. anti-freeze, heated water, heated air, etc., or by actuation of the device is operable to dislodge ice formed on the surface of a wind turbine blade, e.g. through radiative heat transfer, acoustic vibrations, etc. In general, the effectiveness of such de-icing devices 24 is dependent on the distance from the device 24 to the surface of the item it is desired to clear of ice, e.g. due to dispersal pattern of medium, energy requirements, etc.

The wind turbine 10 further comprises a controller (not shown), which is operable to regulate the rotation and pitch of the wind turbine blades 20, and the operation of the de-icing array 22. When it is desired to perform a de-icing operation on a wind turbine blade 20, preferably the wind turbine blade 20 is pitched relative to the de-icing array 22, such that the surface of the wind turbine blade 20 it is desired to clear of ice is positioned directly adjacent the de-icing array 22. In a preferred aspect illustrated in Fig. 2, the wind turbine blade 20 is pitched such that the leading edge 21a of the blade 20 faces the de-icing array 22. As the leading edge 21a of the blade 20 is the area of a wind turbine blade 20 most likely to experience ice build-up resulting in a negative impact on wind turbine 10 performance, the pitching of the blade 20 such that the blade leading edge 21a faces the de-icing array 22 ensures that the leading edge 21a is specifically targeted for de-icing. This ensures that the leading edge 21a is positioned as close as possible to the de-icing devices 24 of the array 22, and within the effective range of the de-icing devices 24.

In the embodiment shown, the de-icing array 22 is rotatably mounted to the wind turbine tower 12 at a first end 22a of the array 22, such that the de-icing array 22 may be independently rotated about the tower 12. It will be understood that any suitable mounting of the de-icing array 22 to the structure of the wind turbine 10 may be provided.

In an alternative embodiment, the base member 26 of the de-icing array 22 is coupled to the wind turbine nacelle 14, at that side of the nacelle 14 adjacent the wind turbine rotor 16, such that rotation of the nacelle 16 also rotates the de-icing array 22. Such an embodiment ensures that the de-icing array 22 is continually provided adjacent the rotational path of the wind turbine blades 20.

In a further alternative embodiment, the de-icing array 22 may be provided in a static location on the periphery of the wind turbine tower 12, wherein the nacelle 14 is yawed to position the rotational path of the wind turbine blades 20 adjacent the fixed de-icing array 22 when it is desired to de-ice the blades 20.

In a preferred embodiment, the controller is operable to halt rotation of the wind turbine rotor 16 when it is desired to carry out a de-icing of the blades 20, wherein the blades 20 are successively parked adjacent the de-icing array 22 for the duration of the de-icing of each blade 20. The parked blade 20 may then be appropriately pitched, such that the surface of the blade it is desired to de-ice faces the de-icing array 22. The controller is further operable to ensure the alignment of the blades 20 and the de-icing array 22 through appropriate rotation of the wind turbine nacelle 14 and/or of the de-icing array 22 itself.

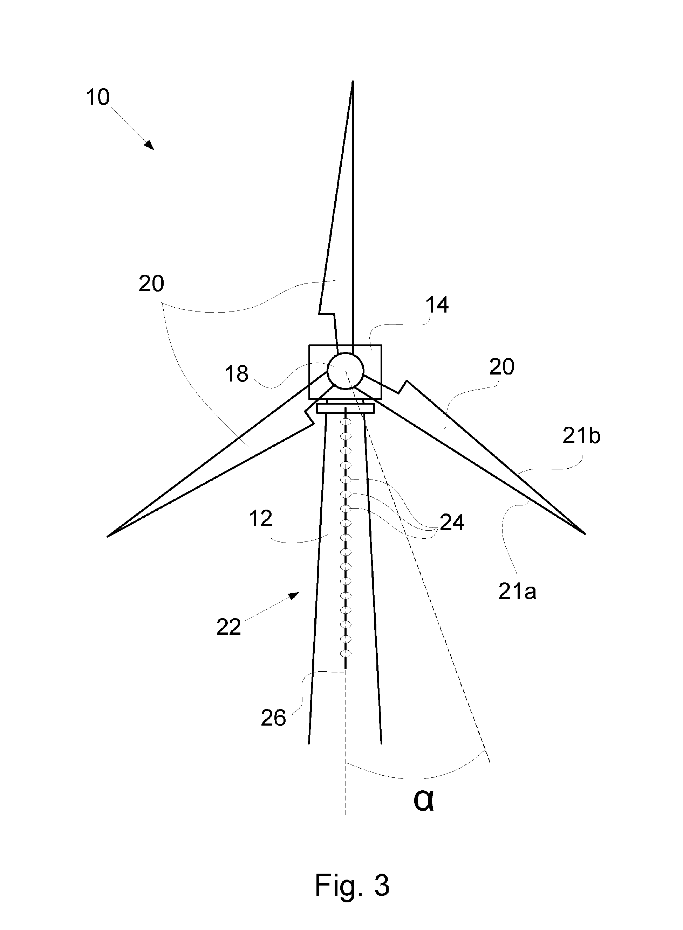

In an alternative embodiment, with reference to Fig. 3, the controller is operable to actuate the de-icing array 22 to disperse a de-icing medium at particular time intervals while the wind turbine blades 20 are rotating on the hub 18. For example, the de-icing devices 24 may be configured to disperse a de-icing medium before a blade 20 is due to rotate past the wind turbine tower 12, such that rotation of the blade 20 along the blade rotational path will ensure that when the blade 20 passes the tower 12, the blade 20 will pass through an area containing the pre-dispersed de-icing medium, e.g. a spray cloud of antifreeze or heated water vapour. In such a case, the de-icing array 22 may be configured to activate when the next blade 20 to rotate past the tower 12 is within a particular angular distance α of the tower 12, relative to the wind turbine rotor hub 18, e.g. within 20 degrees of the tower 12.

Additionally or alternatively, said step of pitching a blade 20 to be cleared of ice may be performed while the blades 20 are rotating on a wind turbine 10, wherein said step of pitching is performed for a particular angular distance of the rotational path of the wind turbine blades 20, i.e. as the blade 20 passes the de-icing array 22.

In one aspect of the invention, the de-icing devices 24 of the array 22 may comprise directional devices, wherein the devices 24 are configured to disperse de-icing medium in a particular direction. Such devices 24 may comprise moveable nozzles or spouts arranged to direct a liquid or vapour medium under pressure in the form of a stream, spray, or cloud; devices configured with moveable deflectors or baffles configured to direct a gaseous medium; devices provided with a movable fan apparatus to generate an airflow in a particular direction for the conveyance of a de-icing medium; and/or acoustic sources having moveable reflectors operable to focus acoustic waves. In such embodiments of the invention, the controller is operable to adjust the direct of the de-icing devices 24, to provide for a more effective de-icing of the wind turbine blades 20.

For example, the controller may receive data relating to the current pitch of the wind turbine blades 20, and may adjust the direction of the de-icing devices 24 based on the detected pitch, to provide for a dispersal pattern of de-icing medium which compensates for blade pitch, e.g. using ballistic deflection techniques, i.e. "leading the target" of the particular portion of the wind turbine blade 20 it is desired to clear of ice. In a further aspect, the controller may be operable to receive data relating to the mechanical deflection of the blade, and accordingly may adjust de-icing device 24 direction based on said blade deflection to ensure targeted de-icing of the portion of the blade 20 it is desired to clear of ice.

In a further aspect of the invention, the controller may be operable to receive data indicative of a build-up of ice on a particular section of the wind turbine blade 20, wherein the controller is operable to actuate only those de-icing devices 24 of the de-icing array 22 adjacent said particular section. Accordingly, this ensures that a de-icing operation, and corresponding usage of de-icing medium, is only applied in that section of the blade 20 having ice, thereby providing for more efficient usage of the de-icing system. In such an embodiment, the controller may be operatively coupled to appropriate sensors provided on the wind turbine 10, e.g. optical sensors including cameras, load sensors, temperature sensors, which are operable to detect a build-up of ice on a surface of a wind turbine blade 20.

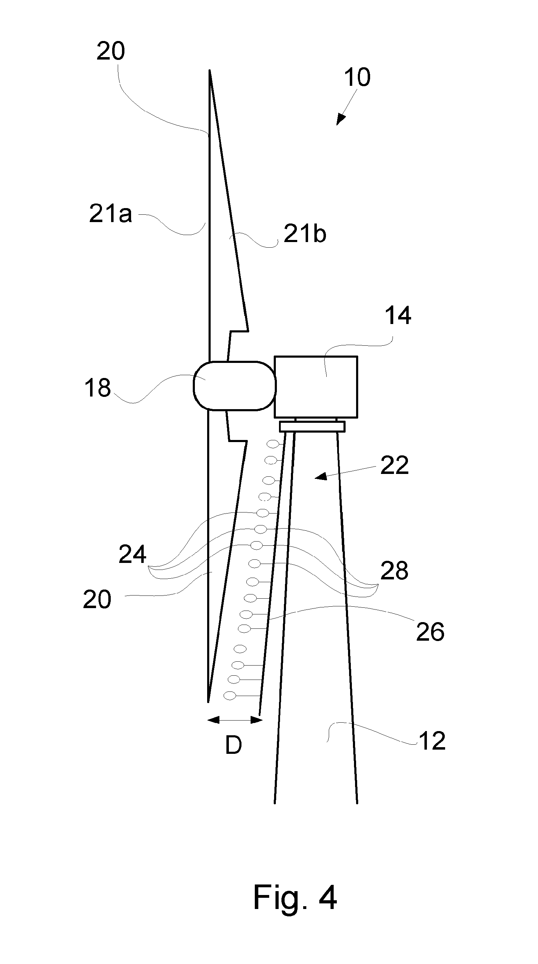

In a further aspect of the invention, and with reference to Fig. 4, the positioning of de-icing devices 24 on a de-icing array 22 may be selected based on shape data for the wind turbine blades 20. The shape data may include pre-defined knowledge of blade shape, including details as to the geometrical shape of the blade profile, e.g. blade pre-bend shape, blade shoulder dimensions, etc. The shape data may further include data indicative of the dynamic blade deflection during wind turbine operation, e.g. the output of a blade deflection monitoring system operable to provide a measure of current and/or predicted blade deflection based on the output of position sensor, distance measurement sensors, and/or optical sensors provided on the wind turbine and/or in the wind turbine blade.

In a first aspect, the de-icing devices 24 are provided on fixed brackets 28 arranged on the base member 26 of the array 22, wherein the height by which the brackets 28 project from the base member 26 is selected based on the pre-defined blade shape, such that the de-icing devices 24 project from the base member 26 in a staggered array. The de-icing devices 24 are arranged to compensate for the known blade shape, such that the blade surface will be within the effective range of the de-icing devices 24 along the length of the wind turbine blade 20 when a de-icing operation is performed. Additionally or alternatively, the shape of the base member 26 of the array 22 may be selected based on the known blade shape.

In a second aspect, the de-icing devices 24 may be provided on adjustable brackets 28 arranged on the base member 26 of the array 22, wherein a linear displacement of the de-icing devices 24 from the base member 26 can be adjusted. In this embodiment, the position of the individual de-icing devices 24 can be adjusted in the direction D, said adjustment performed by the controller based on a combination of the blade shape data and the measured and /or predicted blade deflection. Accordingly, the spacing of the de-icing devices 24 from the surface of the wind turbine blade 20 can be dynamically adjusted to ensure that the blade surface is within the effective range of the de-icing devices 24, and furthermore to reduce the risk of the wind turbine blade 20 striking the de-icing array 22 when said blade 20 experiences deflection.

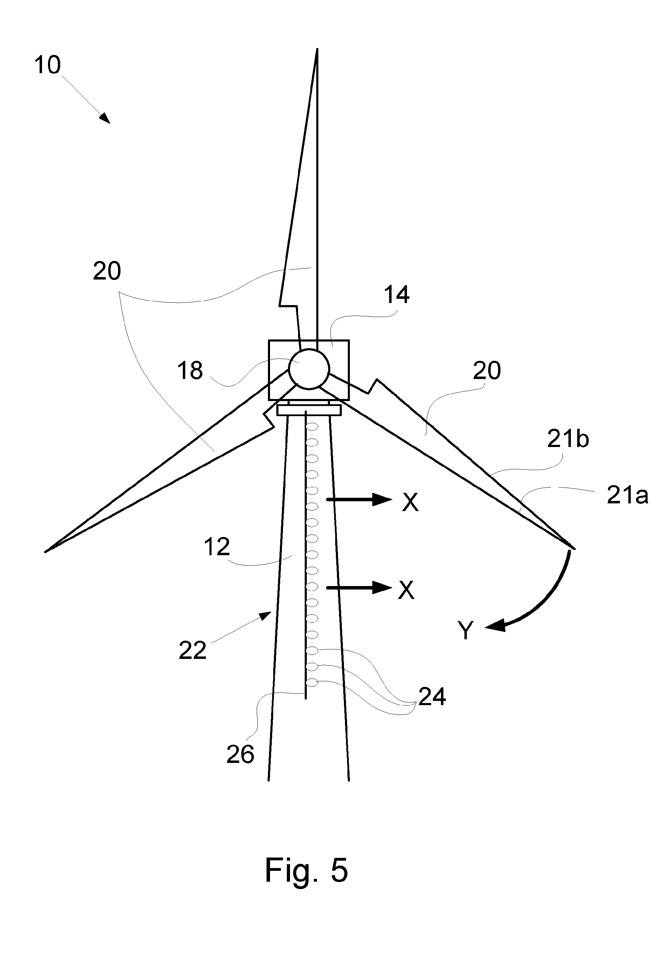

In a further aspect of the invention, with reference to Fig. 5, the de-icing array 22 may comprise a plurality of de-icing devices 24 provided in a particular orientation on the array 22. In this embodiment, the de-icing devices 24 are arranged to face against the direction of rotation of the wind turbine blades 20, such that the dispersal of a de-icing medium from the de-icing devices 24 in the direction of arrows X will be met by the leading edge 21a of the wind turbine blades 20 following the rotational path indicated by arrow Y. Such a configuration ensures that the de-icing medium will be dispersed onto the blade leading edge 21a as the blade 20 rotates past the de-icing array 22. While said orientation is preferably be a fixed orientation, to provide for simple implementation, it will be understood that the features of this embodiment may be combined with any of the above described features.

The use of a de-icing system and method according to the invention provides for a more efficient and effective de-icing of wind turbine blades, with reduced energy and/or de-icing medium requirements, and ensures that de-icing efforts can concentrated and targeted on areas of the blade it is desired to keep clear of ice.

The invention is not limited to the embodiment described herein, and may be modified or adapted without departing from the scope of the present invention.

## Claims

1. A method of de-icing a wind turbine blade provided on a wind turbine, the blade pitchable relative to said wind turbine, the method comprising the steps of:
providing a de-icing array comprising at least one de-icing device; and
pitching said wind turbine blade relative to said de-icing array to provide a targeted de-icing of a portion of the surface of the wind turbine blade.

2. The method of claim 1, wherein the method further comprises the step of performing a de-icing operation of a portion of the surface of the wind turbine blade using said at least one de-icing device after said step of pitching.

3. The method of claim 1 or claim 2, wherein the method comprises the steps of:
pitching said wind turbine blade such that a portion of said blade it is desired to de-ice faces said de-icing array.

4. The method of any preceding claim, wherein the method comprises the step of pitching said wind turbine blade such that the leading edge of the wind turbine blade faces the de-icing array.

5. The method of any preceding claim, wherein the method comprises the step of:
parking a wind turbine blade rotor such that a wind turbine blade is located adjacent said de-icing array.

6. The method of any preceding claim, wherein the method comprises the steps of:
providing at least one directional de-icing device;
receiving blade pitch characteristics indicative of the blade pitching; and
adjusting the direction of said at least one de-icing device based on said received blade pitch characteristics.

7. The method of claim 6, wherein the method comprises the step of adjusting the direction of said at least one de-icing device such that said at least one de-icing device faces the leading edge of said wind turbine blade.

8. The method of any preceding claim, wherein the method comprises the steps of:
receiving blade shape information indicative of the shape of a wind turbine blade; and
positioning said at least one de-icing device based on said received blade shape information.

9. The method of claim 8, wherein said step of receiving blade shape information comprises receiving data in the form of characteristic information regarding the designed geometrical profile of the blade and/or blade deflection information indicative of the deflection of a wind turbine blade during wind turbine operation.

10. The method of claim 8 or claim 9, wherein said step of positioning comprises providing a de-icing array comprising a static arrangement of a plurality of de-icing devices, said de-icing devices positioned based on the pre-defined shape of the wind turbine blade such that the plurality of de-icing devices are located a pre-defined distance from a surface of the wind turbine blade when said wind turbine blade is adjacent said de-icing array.

11. The method of claim 8 or claim 9, wherein said step of positioning comprises providing a de-icing array comprising a dynamically-adjustable arrangement of a plurality of de-icing devices, wherein said plurality of de-icing devices may be positioned based on the dynamically-changing blade shape.

12. The method of claim 11, wherein the method comprises the steps of:
providing said at least one de-icing device on an array base member; and
adjusting a linear displacement of said at least one de-icing device from said array base member based on said received blade shape information.

13. The method of any preceding claim, wherein the method comprises the steps of:
detecting a build-up of ice on a portion of a wind turbine blade; and
adjusting said at least one de-icing device to face said portion of a wind turbine blade having said detected ice build-up.

14. The method of any preceding claim for de-icing at least a portion of a surface of a wind turbine blade of a wind turbine, wherein the method comprises the steps of:
providing a de-icing array moveably mounted to a wind turbine tower of a wind turbine;
parking a wind turbine blade to be de-iced substantially adjacent said wind turbine tower;
moving said de-icing array to a position substantially adjacent said parked wind turbine blade;
pitching said wind turbine blade to be de-iced relative to said de-icing array, such that a surface of said wind turbine blade to be de-iced faces said de-icing array; and
de-icing said surface of said wind turbine blade using said de-icing array.

15. A wind turbine comprising at least one wind turbine blade, a de-icing array comprising at least one de-icing device, and a controller coupled to said de-icing array, wherein said controller is operable to implement the method of any one of claims 1-14.
